# FASCICULE DE BREVET EUROPEEN

(11) **EP 3 698 050 B1**
(45) Date de publication et mention de la délivrance du brevet: **08.06.2022**
(21) Numéro de dépôt: 18765092.4
(22) Date de dépôt: 03.09.2018
(51) Int. Cl.: F04D 29/52, F02C 7/14, F01D 25/18, F01D 9/04

(54) **CARTER EXTÉRIEUR DE TURBO-COMPRESSEUR AVEC RÉSERVOIR D'HUILE INTÉGRÉ**
TURBOVERDICHTER-AUSSENGEHÄUSE MIT INTEGRIERTEM ÖLBEHÄLTER
TURBO-COMPRESSOR OUTER CASING WITH INTEGRATED OIL RESERVOIR

(30) Priorité: 16.10.2017 BE 201705735
(43) Date de publication de la demande: 26.08.2020
(73) Titulaire: Safran Aero Boosters SA, 4041 Herstal (BE)
(72) Inventeur: FELSKE, Jean, 4690 Roclenge/Geer (BE)
(74) Mandataire: Lecomte & Partners
(86) Numéro de dépôt international: PCT/EP2018/073559
(87) Numéro de publication internationale: WO 2019/076519

(56) Documents cités:
- FR-A1- 2 629 872
- GB-A- 1 018 538

## Description

### Domaine technique

L'invention concerne l'architecture d'une turbomachine incluant un réservoir circulaire et un compresseur. L'invention a également trait à une turbomachine axiale, notamment un turboréacteur d'avion ou un turbopropulseur d'aéronef.

### Technique antérieure

Le fonctionnement d'un turboréacteur nécessite la présence d'un réservoir d'huile propre. Ce réservoir peut être intégré dans la nacelle de la turbomachine, ou dans le corps primaire ; c'est-à-dire entre le flux primaire et le flux secondaire. Puisque la compacité reste une contrainte principale dans un turboréacteur, le réservoir d'huile doit être courbé afin de s'insérer entre deux parois annulaires délimitant les flux. La courbure s'accentue à mesure que le volume interne du réservoir augmente.

Le document US 8 627 667 B2 divulgue un turboréacteur double-flux avec une soufflante, un compresseur et une conduite bypass. La conduite bypass est délimitée par une paroi interne et par une paroi externe qui sont réalisées en un matériau composite avec du carbone. La conduite bypass renferme un réservoir, ce réservoir étant circulaire. Or, la capacité du réservoir reste limitée. Par ailleurs, un tel turboréacteur présente une trainée importante.

Le document GB 1,018,538 décrit un carter de compresseur de turboréacteur avec un réservoir 51 fait de deux parties concentriques en regard, et entourant la veine de passage de l'air. Un tel réservoir est imposant, et donc présente des inconvénients d'encombrement et des difficultés d'assemblage.

### Résumé de l'invention

### Problème technique

L'invention a pour objectif de résoudre au moins un des problèmes posés par l'art antérieur. Plus précisément, l'invention a pour objectif d'optimiser la compacité d'une turbomachine et la contenance d'un réservoir. L'invention a également pour objectif de proposer une solution simple, résistante chimiquement et mécaniquement, légère, économique, fiable, facile à produire, commode d'entretien, d'inspection aisée, et améliorant le rendement.

### Solution technique

L'invention a pour objet un ensemble pour turbomachine selon la revendication 1.

Selon des modes avantageux de l'invention, l'ensemble peut comprendre une ou plusieurs des caractéristiques suivantes, prises isolément ou selon toutes les combinaisons techniques possibles :
- Le compresseur comprend au moins une rangée annulaire d'aubes en amont de la bride.
- L'ensemble comprend une rangée d'aubes statoriques s'étendant radialement depuis la surface interne.
- Les aubes sont disposées axialement au niveau de la chambre interne.
- Les aubes sont en contact thermique de la chambre interne et de la veine primaire.
- Chaque aube comprend une plateforme de fixation traversant axialement la chambre interne du réservoir.
- Le réservoir comprend une extrémité amont et une extrémité aval entre lesquelles sont disposées les aubes statoriques.
- Le réservoir comprend une cloison annulaire amont et une cloison annulaire aval, l'une desdites cloisons annulaires étant au niveau axialement d'une aube statorique.
- La distance axiale entre la bride et la cloison annulaire aval recouvre au moins quatre rangées annulaires d'aubes.
- La paroi annulaire est réalisée en matériau composite à matrice organique.
- Le carter, notamment la paroi composite, est monobloc ou formé de demi-coquilles.
- Le réservoir est formé de deux demi-tores.
- L'ensemble comprend un joint annulaire apte à coopérer par abrasion avec un rotor du compresseur, ledit joint étant disposé axialement au niveau de la chambre annulaire.
- La paroi est pleine au niveau de la chambre.
- La paroi est monobloc entre la surface interne et la surface externe et/ou au niveau axialement de la chambre, notamment sur un tronçon angulaire.
- L'ensemble comprend un compresseur avec un rotor, notamment basse-pression, le carter externe étant le carter dudit compresseur et le réservoir entourant le rotor du compresseur.
- Le rotor comporte un tambour monobloc comportant plusieurs rangées annulaires d'aubes rotoriques au niveau axialement de la chambre interne.
- La surface interne et la surface externe sont opposées selon l'épaisseur de la paroi et/ou au même niveau axialement, par exemple au niveau de la chambre.
- Le réservoir comprend une extrémité amont et une extrémité aval entre lesquelles est placé le joint.
- L'extrémité amont et l'extrémité aval sont axialement à distance des aubes.
- L'extrémité amont et l'extrémité aval sont axialement à distance du joint.
- Le joint est un joint abradable, notamment avec du silicone, ou avec une composition aluminium nickel polymère.
- L'épaisseur de la paroi est inférieure ou égale à : 10mm, ou 5mm, ou 2mm.
- Le volume de la chambre est supérieur ou égal à : 10L, ou 20L, ou 50L, ou 70L.
- La plateforme est en contact de la paroi.

L'invention a également pour objet une turbomachine, notamment un turboréacteur d'aéronef, comprenant un ensemble, remarquable en ce que l'ensemble est conforme à l'invention, éventuellement le réservoir est un réservoir d'huile.

Selon un mode avantageux de l'invention, la turbomachine comprend un bec de séparation annulaire avec un dispositif de dégivrage par huile, le dispositif de dégivrage étant connecté hydrauliquement au réservoir d'huile.

Selon un mode avantageux de l'invention, la turbomachine comprend un collecteur annulaire d'huile, ledit collecteur étant connecté hydrauliquement au réservoir d'huile.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné.

### Avantages apportés

L'invention améliore la compacité de la turbomachine car elle rapproche et fusionne le réservoir du compresseur. La chambre de ce dernier est intégrée dans la paroi annulaire. Une économie substantielle est acquise par la mutualisation de la paroi.

En complément, un rapprochement entre le réservoir et les aubes est assuré. Par ce biais, il devient possible d'exploiter les surfaces d'échange thermique des aubes baignant dans la source froide, en l'occurrence le flux primaire. L'échange thermique s'effectue au travers de la paroi, il peut être amélioré grâce aux cloisons qui sont elles-mêmes en contact thermiques des aubes.

La jonction du réservoir au carter permet de renforcer ce dernier. En effet, le réservoir forme un profilé rigide qui augmente le moment quadratique du réservoir.

### Brève description des dessins

La figure 1 représente une turbomachine axiale selon l'invention.
La figure 2 est un schéma d'un compresseur de turbomachine selon un premier mode de réalisation de l'invention.
La figure 3 illustre une coupe de turbomachine suivant l'axe 3-3 tracé sur la figure 2.
La figure 4 représente un carter et un réservoir selon un deuxième mode de réalisation de l'invention.
La figure 5 représente un carter et un réservoir selon un troisième mode de réalisation de l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

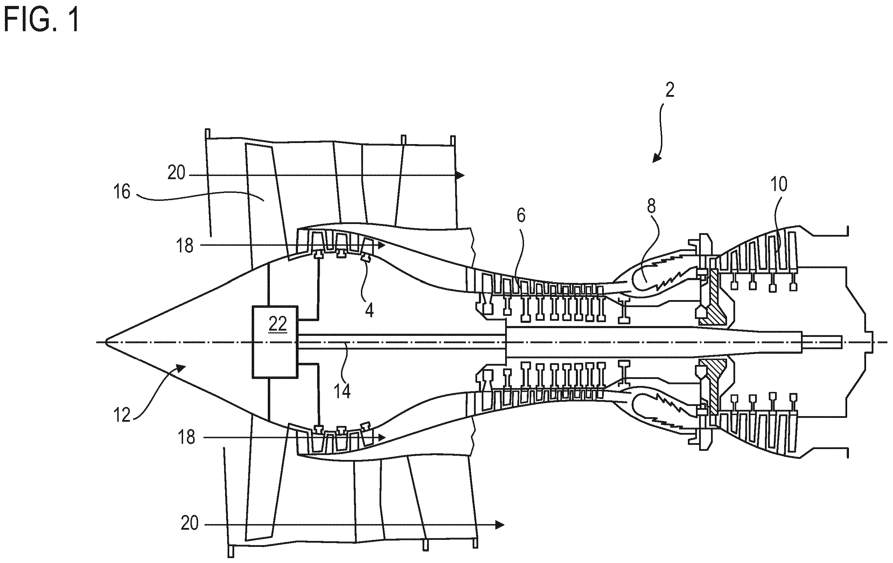

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et en un flux secondaire 20 traversant un conduit annulaire (partiellement représenté) le long de la machine pour ensuite rejoindre le flux primaire en sortie de turbine.

Des moyens de démultiplication 22, tel un ou plusieurs réducteurs épicycloïdaux, peuvent réduire la vitesse de rotation de la soufflante. Les moyens de démultiplication 22 peuvent augmenter ou réduire la vitesse de rotation du compresseur basse-pression 4 par rapport à la turbine et/ou à la soufflante 12. Le flux secondaire 20 peut être accéléré de sorte à générer une réaction de poussée nécessaire au vol d'un avion. Les flux primaire 18 et secondaire 20 sont des flux annulaires coaxiaux et emmanchés l'un dans l'autre.

La turbomachine 2 peut comprendre un circuit hydraulique, notamment relié à un réservoir. Le circuit peut être branché à un échangeur de chaleur permettant de refroidir l'huile issue de paliers de la turbomachine et des moyens de démultiplication 22.

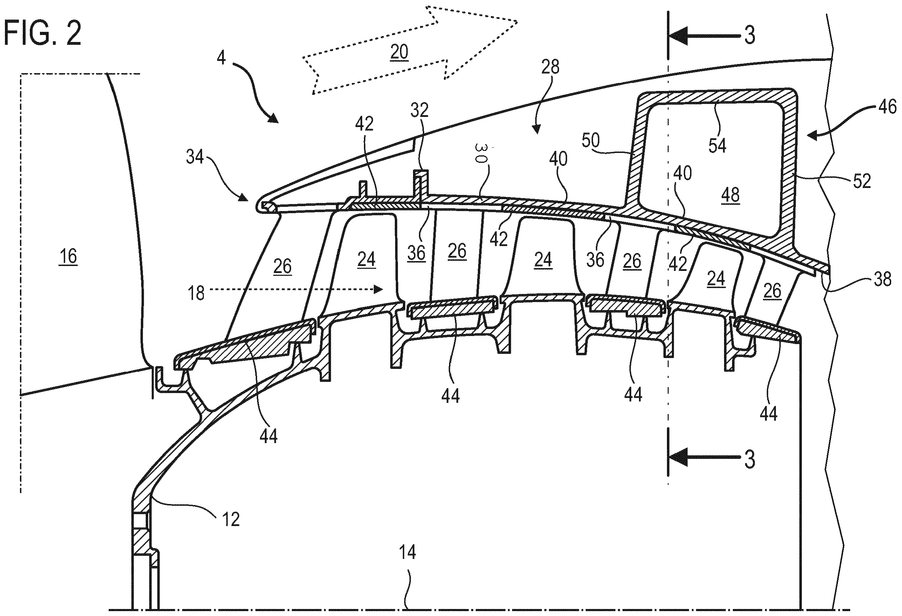

La figure 2 est une vue en coupe d'un compresseur d'une turbomachine axiale telle que celle de la figure 1. Le compresseur peut être un compresseur basse-pression 4. Le rotor 12 comprend plusieurs rangées d'aubes rotoriques 24, en l'occurrence trois. Il peut être un tambour monobloc aubagé, ou comprendre des aubes à fixation par queue d'aronde dans une gorge périmétrique. L'axe de rotation 14 est tracé.

Le compresseur basse-pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression, notamment en pression statique. Les aubes (24 ; 26) présentent des surfaces concaves et convexes, configurées pour comprimer le flux.

Les aubes statoriques 26 s'étendent essentiellement radialement depuis un carter externe 28. Elles peuvent être vissées, collées ou soudées à la paroi annulaire 30. Grâce à des brides annulaires 32, le carter 28 peut être relié au support de soufflante de la turbomachine, ou au bec de séparation 34 partageant le flux primaire 18 et le flux secondaire 20 en aval de la soufflante 16. La paroi 30 peut être réalisée en matériau composite à matrice organique et à fibres de carbone, ou en métal tel du titane. Son épaisseur, mesurée radialement, peut être comprise entre 3mm et 5mm inclus.

Les aubes statoriques 26 peuvent être munies de plateformes de fixation 36. Celles-ci sont plaquées contre la surface circulaire interne 38 de la paroi 30. La bride 32 s'étend radialement depuis la surface circulaire externe 40 qui est opposée à la surface interne 38 selon l'épaisseur de la paroi 30.

La paroi 30 peut recevoir un ou plusieurs joints annulaires 42, par exemple au contact de la surface interne 38 et/ou des plateformes 36. Les joints 42 peuvent être du type abradable, en ce sens qu'ils sont aptes à s'effriter au contact du rotor 12. Ils peuvent assurer des étanchéités avec les rangées d'aubes rotoriques 24. Des viroles internes 44 suspendues aux aubes statoriques 26 peuvent assurer des étanchéités avec des léchettes du rotor 12.

Un réservoir 46, notamment d'huile, est associé au compresseur 4. Ils partagent la paroi 30. Celle-là peut délimiter la chambre interne 48 du réservoir 46. Cette dernière peut être circulaire et entourer l'axe de rotation du rotor 12. Ainsi, la chambre 48 est entre le flux primaire 18 et le flux secondaire 20. Le carter peut être formé de plusieurs viroles externes, chacune étant une boucle fermée, le réservoir étant formé sur une des viroles. Alternativement, le réservoir peut être formé de demi-coquilles.

Le réservoir s'étend axialement d'une certaine valeur, préférentiellement apte à recouvrir au moins une rangée d'aube, voir au moins deux ou au moins trois rangées d'aubes.

La bride 32 est à une distance du réservoir 46 qui est d'au moins la dimension axiale du réservoir 46. Ceci permet une versatilité du système, limitant l'encombrement du réservoir et facilitant le montage du carter d'une part et potentiellement d'autres éléments autour du carter.

La chambre 48 peut être à cheval sur une ou plusieurs rangées d'aubes statoriques 26, et peut éventuellement traverser axialement un joint 42 et/ou des aubes rotoriques 24. Elle peut être axialement au niveau d'une ou de plusieurs rangées de plateformes 36. Les aubes statoriques 26 peuvent comprendre des pales s'étendant radialement depuis les plateformes 36 dans la veine primaire, qui est notamment traversée par le flux primaire 18. La chambre 48 peut être axialement au niveau d'au moins une ou plusieurs rangées de pales.

Le réservoir 46 peut être cloisonné à l'aide de plusieurs parties annulaires. Il peut inclure une cloison annulaire amont 50 et une cloison annulaire aval 52. Il peut inclure une cloison annulaire externe 54 entourant la surface externe 40, et/ou reliant les cloisons amont 50 et aval 52. La paroi 30 et les cloisons 50, 52 et 54 renferment la chambre 48, notamment de manière étanche.

La cloison amont 50 et aval 52 peuvent être au niveau de deux rangées d'aubes statoriques 26. La chambre peut être en contact thermique des aubes statoriques 26 via la paroi 30. Par exemple, la cloison amont 50 peut être en contact thermique d'une rangée d'aubes 26, et/ou la cloison aval 52 peut être en contact thermique d'une rangée d'aubes 26, éventuellement d'une autre rangée. Ainsi, les cloisons 50 et 52 peuvent également être refroidies grâce au flux primaire 18, puis refroidir à leur tour l'huile.

Les cloisons (50-54) et la paroi 30 peuvent former un ensemble monobloc et éventuellement venu de matière.

Eventuellement, les cloisons (50-54) et la paroi 30 peuvent être formées de tronçons angulaires monoblocs et venus de matière. Chaque tronçon peut comprendre une pluralité d'aubes 26, par exemple de dix à vingt. Les tronçons peuvent être produits par fabrication additive, puis être reliés les uns aux autres bout-à-bout angulariement, par exemple pour soudage ou par collage. Des joints peuvent être ajoutés aux interfaces angulaires des tronçons, par exemple dans l'épaisseur des cloisons et de la paroi. Ainsi, le carter 28 et le réservoir 46 se renforcent mutuellement.

La chambre 48 peut être connectée à un dispositif de dégivrage du bec de séparation 34 et/ou des aubes statoriques 26. Des conduites (non représentés) peuvent être branchées à la chambre pour canaliser un débit d'huile depuis et vers la chambre 48. Cette configuration simplifie l'adduction de fluide caloporteur, et optimise le dégivrage.

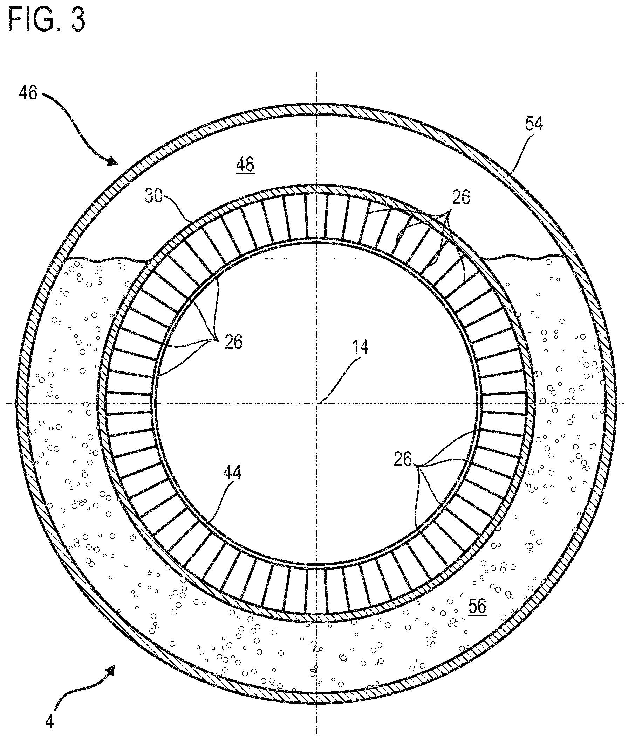

La figure 3 est une coupe de la turbomachine suivant l'axe 3-3 tracé sur la figure 2. La rangée annulaire d'aubes statoriques 26 et la virole interne 44 sont représentées autour de l'axe de rotation 14 du compresseur 4. Le nombre d'aubes 26 est ici purement figuratif, et peut être supérieur ou égal à 50 ou à 100.

De l'huile 56 remplit partiellement la chambre 48. Le réservoir convient pour d'autres fluides ou liquides, éventuellement grâce à des adaptations. La forme annulaire du réservoir 46 en augmente la hauteur, ce qui y améliore le dégazage et la décantation des particules solides issues de l'usure. L'augmentation de la surface d'enveloppe en contact de la chambre 48 favorise l'échange thermique.

En fonctionnement, l'huile 56 peut atteindre les 200°C. Elle peut également inclure des additifs rendant l'huile d'avantage corrosive. La présence de ces additifs peut découler du domaine des turbomachines et/ou des turboréacteurs. La cloison 30 peut former une séparation étanche et/ou une jonction structurelle entre les aubes 26 et la chambre 48. La cloison externe 54 peut l'entourer.

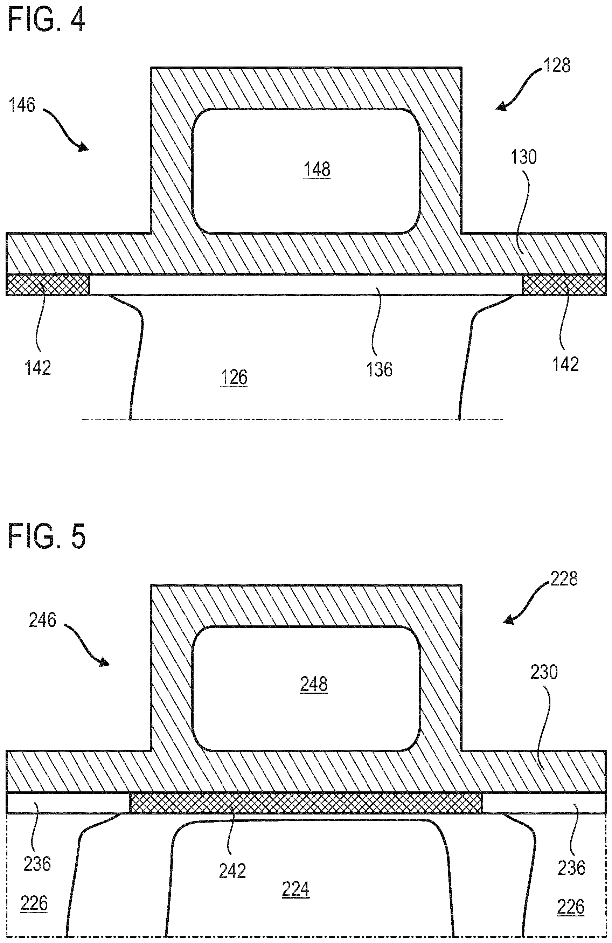

La figure 4 représente un carter 128 et un réservoir 146 selon un deuxième mode de réalisation de l'invention. Cette figure 4 reprend la numérotation des figures précédentes pour les éléments identiques ou similaires, la numération étant toutefois incrémentée de 100.

Le deuxième de mode de réalisation est identique au premier mode de réalisation, il s'en distingue toutefois en ce que le réservoir 146, et notamment sa chambre 148, sont inscrits dans la longueur axiale de l'aube statorique 126, par exemple entre son bord d'attaque et son bord de fuite, et/ou dans la longueur axiale de la plateforme 136. La chambre 148, et éventuellement le réservoir 246 dans son ensemble, sont à distance axialement des joints 142 ; par exemple en amont et en aval de l'aube 126.

Via cette disposition, la plateforme 136 forme un blindage qui protège la chambre 148, en formant un laminé avec la paroi 130. Cette configuration améliore également la conduction thermique.

La figure 5 représente un carter 228 et un réservoir 246 selon un troisième mode de réalisation de l'invention. Cette figure 5 reprend la numérotation des figures précédentes pour les éléments identiques ou similaires, la numération étant toutefois incrémentée de 200.

Le troisième de mode de réalisation est identique au premier mode de réalisation, il s'en distingue toutefois en ce que le réservoir 246, et notamment sa chambre 248, sont inscrits dans la longueur axiale d'un joint 242, qui entoure par exemple une rangée annulaire d'aubes rotoriques 224. Le joint 242 peut alors participer à l'étanchéité du réservoir 246, et éventuellement le protéger. Les aubes statoriques 226 peuvent être fixées à l'aide d'axes traversant la paroi 230 du carter 228, le réservoir 246 étant à distance axialement desdits axes. Le réservoir 246 peut être à distance axialement des pales des aubes statoriques 226. Il peut également être à distance des plateformes 236. Cet agencement favorise la fixation des aubes 226 par leurs plateformes 236, par exemple lorsque ces dernières sont soudées à la paroi 230. La paroi 230 peut comprendre des ouvertures fermées par les plateformes.

Cela éloigne les fixations du réservoir, ce qui préserve la chambre tout en simplifiant ces mêmes fixations, qu'il s'agisse de collage, de soudures ou de vis, ou de tout autre moyen équivalent.

Si ces plateformes avaient été au niveau axialement de la chambre, elles la délimiteraient en combinaison avec la paroi.

Selon l'invention, il est possible de pourvoir un carter de compresseur de plusieurs réservoirs répartis axialement, chaque réservoir étant selon un des différents modes de réalisation de l'invention.

Dans toute description, les caractéristiques décrites pour une aube peuvent s'appliquer à toutes les aubes de la rangée correspondante, comme à toutes les rangées d'aubes évoquées précédemment.

## Revendications

1. Ensemble pour turbomachine (2), l'ensemble comprenant: un axe de rotation (14) de la turbomachine (2), un carter externe (28 ; 128 ; 228) de compresseur (4 ; 6) avec une paroi annulaire (30 ; 130 ; 230) présentant une surface circulaire interne (38) délimitant une veine primaire du compresseur (4 ; 6), et un réservoir (46 ; 146 ; 246) pour liquide avec une chambre interne circulaire (48 ; 148 ; 248) autour de l'axe de rotation (14), la paroi (30 ; 130 ; 230) comprenant, une surface circulaire externe (40) qui délimite la chambre interne (48 ; 148 ; 248) du réservoir (46 ; 146 ; 246), **caractérisé en ce que** le carter (28; 128; 228) comprend une bride annulaire de fixation (32) en amont, et axialement à distance, du réservoir (46 ; 146 ; 246), la bride (32) s'étendant radialement depuis la paroi annulaire (30 ; 130 ; 230), et la bride (32) et le réservoir (46; 146; 246) étant séparés axialement d'une distance au moins égale à la dimension axiale du réservoir (46 ; 146 ; 246).

2. Ensemble selon la revendication 1, **caractérisé en ce qu'**il comprend au moins une rangée annulaire d'aubes (24 ; 26) en amont de la bride (32).

3. Ensemble selon la revendication 1 ou 2, **caractérisé en ce qu'**il comprend une rangée d'aubes statoriques (26; 126; 226) s'étendant radialement depuis la surface interne (38) et disposées axialement au niveau de la chambre interne (48 ; 148), les aubes (26 ; 126) étant préférentiellement en contact thermique de la chambre interne (48 ; 148) et de la veine primaire.

4. Ensemble selon la revendication 3, **caractérisé en ce que** chaque aube (126) comprend une plateforme de fixation (136) s'étendant sur toute la longueur axiale la chambre interne (148) du réservoir (146).

5. Ensemble selon l'une des revendications 3 ou 4, **caractérisé en ce que** le réservoir comprend une extrémité amont et une extrémité aval entre lesquelles sont disposées les aubes statoriques.

6. Ensemble selon l'une des revendications 3 à 5, **caractérisé en ce que** le réservoir (46 ; 146) comprend une cloison annulaire amont (50) et une cloison annulaire aval (52), l'une desdites cloisons annulaires (50 ; 52) étant au niveau axialement d'une aube statorique (26 ; 126).

7. Ensemble selon la revendication 6, **caractérisé en ce que** la distance axiale entre la bride (32) et la cloison annulaire aval (52) recouvre au moins quatre rangées annulaires d'aubes (24 ; 26).

8. Ensemble selon l'une des revendications 1 à 7, **caractérisé en ce que** le réservoir (46 ; 146 ; 246) est formé de deux demi-tores.

9. Ensemble selon l'une des revendications 1 à 8, **caractérisé en ce qu'**il comprend un joint annulaire (42 ; 242) apte à coopérer par abrasion avec un rotor (12) du compresseur (4 ; 6), ledit joint étant disposé axialement au niveau de la chambre annulaire (26 ; 226).

10. Ensemble selon l'une des revendications 1 à 9, **caractérisé en ce que** la paroi (30 ; 130 ; 230) est pleine au niveau de la chambre (48 ; 148 ; 248).

11. Ensemble selon l'une des revendications 1 à 10, **caractérisé en ce qu'**il comprend un compresseur (4 ; 6) avec un rotor (12), notamment un compresseur basse-pression, le carter externe (28; 128; 228) étant le carter dudit compresseur et le réservoir (46 ; 146 ; 246) entourant le rotor (12) du compresseur (4 ; 6).

12. Ensemble selon la revendication 11, **caractérisé en ce que** le rotor (12) comporte un tambour monobloc comportant plusieurs rangées annulaires d'aubes rotoriques (24) au niveau axialement de la chambre interne (48 ; 248).

13. Turbomachine (2), notamment un turboréacteur d'aéronef, comprenant un ensemble, **caractérisée en ce que** l'ensemble est conforme à l'une des revendications 1 à 12, éventuellement le réservoir (46 ; 146 ; 246) est un réservoir d'huile.

14. Turbomachine (2) selon la revendication 13, **caractérisée en ce qu'**elle comprend un bec de séparation annulaire (34) avec un dispositif de dégivrage par huile, le dispositif de dégivrage étant connecté hydrauliquement au réservoir d'huile (46 ; 146 ; 246).

15. Turbomachine (2) selon l'une des revendications 13 à 14, **caractérisée en ce qu'**elle comprend un collecteur annulaire d'huile, ledit collecteur étant connecté hydrauliquement au réservoir d'huile (46 ; 146 ; 246).

## Patentansprüche

1. Eine Turbomaschinenbaugruppe (2), die aus folgenden Teilen besteht: einer Drehachse (14) der Turbomaschine (2), einem Außengehäuse (28; 128; 228) eines Verdichters (4; 6) mit einer ringförmigen Wand (30; 130; 230), die eine kreisförmige Innenfläche (38) aufweist, die einen Primärstrom des Verdichters (4; 6) begrenzt, und einem Behälter (46; 146; 246) für Flüssigkeit mit einer kreisförmigen Innenkammer (48; 148; 248) um die Drehachse (14), wobei die Wand (30; 130; 230) eine äußere kreisförmige Fläche (40) aufweist, die die Innenkammer (48; 148; 248) des Behälters (46; 146; 246) begrenzt, **dadurch gekennzeichnet, dass** das Gehäuse (28; 128; 228) einen ringförmigen Flansch (32) stromaufwärts und axial entfernt von dem Behälter (46; 146; 246) aufweist, wobei sich der Flansch (32) radial von der ringförmigen Wand (30; 130; 230) erstreckt und der Flansch (32) und der Behälter (46; 146; 246) axial durch einen Abstand getrennt sind, der mindestens gleich der axialen Abmessung des Behälters (46; 146; 246) ist.

2. Baugruppe nach Anspruch 1, **dadurch gekennzeichnet, dass** sie mindestens eine radiale Leitschaufel (24; 26) stromaufwärts des Flansches (32) aufweist.

3. Baugruppe nach Anspruch 1 oder 2, **dadurch gekennzeichnet, dass** sie eine Reihe von Statorschaufeln (26; 126; 226) aufweist, die sich radial von der Innenfläche (38) weg erstrecken und axial am Innenraum (48; 148) angeordnet sind, wobei die Schaufeln (26; 126) vorzugsweise in thermischem Kontakt mit dem Innenraum (48; 148) und der Primärströmung stehen.

4. Baugruppe nach Anspruch 3, **dadurch gekennzeichnet, dass** jede Schaufel (126) eine sich über die gesamte axiale Länge der Innenkammer (148) des Tanks (146) erstreckende Montageplattform (136) aufweist.

5. Baugruppe nach einem der Ansprüche 3 oder 4, **dadurch gekennzeichnet, dass** der Tank zwei Enden aufweist, die stromaufwärts bzw. stromabwärts angeordnet sind und zwischen denen die Statorschaufeln angeordnet sind.

6. Baugruppe nach einem der Ansprüche 3 bis 5, **dadurch gekennzeichnet, dass** der Behälter (46; 146) ein stromaufwärts gelegenes ringförmiges Abteil (50) und ein stromabwärts gelegenes ringförmiges Abteil (52) umfasst, wobei eines der ringförmigen Abteile (50; 52) axial bündig mit einer Statorschaufel (26; 126) angeordnet ist.

7. Baugruppe nach Anspruch 6, **dadurch gekennzeichnet, dass** sich der axiale Abstand zwischen dem Flansch (32) und dem stromabwärts gelegenen ringförmigen Abteil (52) über die Länge von mindestens vier Reihen von radialen Leitschaufeln (24; 26) erstreckt.

8. Baugruppe nach einem der Ansprüche 1 bis 7, **dadurch gekennzeichnet, dass** der Behälter (46; 146; 246) zwei Sämaschinen umfasst.

9. Baugruppe nach einem der Ansprüche 1 bis 8, **dadurch gekennzeichnet, dass** sie eine ringförmige Dichtung (42; 242) aufweist, die dazu geeignet ist, mit einem Rotor (12) des Kompressors (4; 6) abrasiv zusammenzuwirken, wobei die Dichtung axial in der ringförmigen Kammer (26; 226) angeordnet ist.

10. Baugruppe nach einem der Ansprüche 1 bis 9, **dadurch gekennzeichnet, dass** die Wand (30; 130; 230) an der Kammer (48; 148; 248) massiv ist.

11. Baugruppe nach einem der Ansprüche 1 bis 10, **dadurch gekennzeichnet, dass** sie einen Kompressor (4; 6) mit einem Rotor (12), insbesondere einen Niederdruckkompressor, umfasst, wobei das Außengehäuse (28; 128; 228) das Gehäuse des Kompressors ist und der Behälter (46; 146; 246) den Rotor (12) des Kompressors (4; 6) umgibt.

12. Baugruppe nach Anspruch 11, **dadurch gekennzeichnet, dass** der Rotor (12) eine einteilige Trommel mit einer Vielzahl von ringförmigen Reihen von radialen Schaufeln (24) umfasst, die axial an der inneren Kammer (48; 248) angeordnet sind.

13. Turbomaschine (2), insbesondere Flugzeug-Turbotriebwerk mit einer Baugruppe, **dadurch gekennzeichnet, dass** die Baugruppe nach einem der Ansprüche 1 bis 12 ausgebildet ist, wobei der Behälter (46; 146; 246) gegebenenfalls ein Öltank ist.

14. Turbomaschine (2) nach Anspruch 13, **dadurch gekennzeichnet, dass** sie eine ringförmige Trenndüse (34) mit einer Enteisungsvorrichtung auf Ölbasis umfasst, wobei die Enteisungsvorrichtung hydraulisch mit dem Öltank (46; 146; 246) verbunden ist.

15. Turbomaschine (2) nach einem der Ansprüche 13 bis 14, **dadurch gekennzeichnet, dass** sie einen Ölringverteiler umfasst, der hydraulisch mit dem Ölbehälter (46; 146; 246) verbunden ist.

## Claims

1. Assembly for a turbine engine (2), the assembly comprising: an axis of rotation (14) of the turbine engine (2); an outer casing (28; 128; 228) of a compressor (4; 6) with an annular wall (30; 130; 230) having an inner circular surface (38) delimiting a primary flow-path of the compressor (4; 6); and a tank (46; 146; 246) for a liquid, with an inner circular chamber (48; 148; 248) extending around the axis of rotation (14), the wall (30; 130; 230) including an outer circular surface (40) delimiting the inner chamber (48; 148; 248) of the tank (46; 146; 246);
**characterized in that** the casing (28; 128; 228) comprises a fixing annular flange (32) positioned upstream, and axially spaced, from the tank (46; 146; 246), the flange (32) radially extending from the annular wall (30; 130; 230), and the flange (32) and the tank (46; 146; 246) being axially separated from each other by a distance that is at least equal to the axial dimension of the tank (46; 146; 246).

2. Assembly according to claim 1, **characterized in that** it comprises at least one annular row of blades (24; 26) that is positioned upstream of the flange (32).

3. Assembly according to claim 1 or 2, **characterized in that** it comprises a row of stator blades (26; 126; 226) extending radially from the inner surface (38) and arranged at the same axial position as the inner chamber (48; 148), the blades (26; 126) preferentially being in thermal contact with the inner chamber (18; 148) and with the primary flow-path.

4. Assembly according to claim 3, **characterized in that** each of the blades (126) comprises a fixing platform (136) extending on the entire axially length of the inner chamber (148) of the tank (146).

5. Assembly according to any one of claims 3 and 4, **characterized in that** the tank comprises an upstream end and a downstream end between which the stator blades are positioned.

6. Assembly according to any one of claims 3 to 5, **characterized in that** the tank (46; 146) comprises an upstream annular partition (50) and a downstream annular partition (52), one of said annular partitions (50; 52) being at the same axial position as one of the stator blades (26; 126).

7. Assembly according to claim 6, **characterized in that** the axial distance between the flange (32) and the downstream annular partition (52) overlaps at least four annular rows of blades (24; 26).

8. Assembly according to any one of claims 1 to 7, **characterized in that** the tank (46; 146; 246) consists of two half-tores.

9. Assembly according to any one of claims 1 to 8, **characterized in that** it comprises an annular seal (42; 242) adapted to cooperate by abrasion with a rotor (12) of the compressor (4; 6), said seal being arranged at the same axial position as the annular chamber (26; 226).

10. Assembly according to any one of claims 1 to 9, **characterized in that** the wall (30; 130; 230) is solid at the chamber (48; 148; 248).

11. Assembly according to any one of claims 1 to 10, **characterized in that** it comprises a compressor (4; 6) with a rotor (12), in particular a low-pressure compressor, the outer casing (28; 128; 228) being the casing of said compressor and the tank (46; 146; 246) surrounding the rotor (12) of the compressor (4; 6).

12. Assembly according to claim 11, **characterized in that** the rotor (12) has a one-piece drum having a plurality of annular rows of rotor blades (24) at the same axial position as the internal chamber (48; 248).

13. Turbo engine (2), in particular an aircraft turbojet engine, comprising an assembly, **characterized in that** the assembly is according to any one of claims 1 to 12, optionally the tank (46; 146; 246) is an oil tank.

14. Turbo engine (2) according to claim 13, **characterized in that** it comprises an annular separation spout (34) with an oil defrosting device, the defrosting device being fluidly connected to the oil tank (46; 146; 246).

15. Turbo engine (2) according to any of claims 13 and 14, **characterized in that** it comprises an oil annular collector, said collector being fluidly connected to the oil tank (46; 146; 246).
